# EUROPEAN PATENT APPLICATION

(11) **EP 4 734 311 A1**
(43) Date of publication of application: **29.04.2026**
(21) Application number: 25210480.7
(22) Date of filing: 22.10.2025
(51) Int. Cl.: H02J 1/08, H02J 1/102, H02J 3/36

(54) **BIPOLAR-INDEPENDENT DC POWER DELIVERY SYSTEM**

(30) Priority: 22.10.2024 US 202463710448 P; 21.10.2025 US 202519364031
(71) Applicant: Delta Electronics, Inc., Taipei 114501 (TW)
(72) Inventor: Hu, Boxue, 27560 Morrisville, NC (US); Wang, Ruxi, 27560 Morrisville, NC (US); Barbosa, Peter Mantovanelli, 320023 Taoyuan City (TW); Huang, Wen-Lung, 320023 Taoyuan City (TW); Yeh, Po-Yi, 320023 Taoyuan City (TW)
(74) Representative: Petraz, Gilberto Luigi

(57) **Abstract**

This disclosure provides a bipolar-independent DC power delivery system. The bipolar-independent DC power delivery system includes a grid-tied power electronic converter, a bipolar DC power busway, and a power conversion unit. The grid-tied power electronic converter connects to a medium-voltage distribution grid and converts the distribution grid voltage to two independent DC voltages with same magnitude and opposite polarities. The bipolar DC power busway connects two independent DC voltages generated from the grid-tied power electronic converter to the power conversion unit. The power conversion unit can receive or send electric power from one or two independent DC voltage(s). The proposed DC power delivery system can continue to operate at de-rated power when one of two independent DC voltages fails.

## Description

### CROSS REFERENCE TO RELATED APPLICATIONS

This application claims the benefit of U.S. provisional patent application Ser. No. 63/710,448, filed October 22, 2024, and U.S. patent application Ser. No. 19/364,031, filed October 21, 2025, the entirety of which is incorporated by reference herein.

### FIELD OF INVENTION

The present disclosure relates to a DC power delivery system, and in particular, relates to a bipolar-independent DC power delivery system.

### BACKGROUND OF INVENTION

A DC power delivery system is often implemented to interface a medium-voltage distribution grid with a variety of electrical loads and sources. The line-frequency transformer has bulky size, high material cost, and long commission time. Grid-tied power electronic converters have been developed to replace the line-frequency transformer and the front-end AC/DC stage. The grid-tied power electronic converter utilizes medium-frequency transformers to achieve isolation between medium-voltage distribution grid and low-voltage DC voltage distribution network. Bulky high-cost line-frequency transformers are eliminated in this way. Existing grid-tied power electronic converters generate only one low-voltage DC voltage output. If a failure occurs in the low-voltage DC voltage, all down-stream devices will stop operations. There is no fault tolerance operation. Certain grid-tied power electronic converters are used to create bipolar output lines in reference to protective earth (PE) line. The two outputs of this type of power electronic converters are dependent of each other. If one output has fault, the other output will shut down as well.

### SUMMARY OF INVENTION

In view of the above, the disclosure provides a bipolar-independent DC power delivery system.

In order to achieve above-mentioned object of the disclosure, one embodiment of the disclosure provides a bipolar-independent DC power delivery system, including: a grid-tied power electronic converter, a bipolar DC power busway, and at least one power conversion unit. The grid-tied power electronic converter is configured to connect with a medium-voltage distribution grid to convert a distribution grid voltage of the medium-voltage distribution grid to two independent DC voltages with same magnitude and opposite polarities. The bipolar DC power busway is connected to the grid-tied power electronic converter, and the at least one power conversion unit is connected to the bipolar DC power busway. The at least one power conversion unit is configured to receive or send electric power from at least one of the independent DC voltages.

Optionally, in the bipolar-independent DC power delivery system, the grid-tied power electronic converter includes a protective earth line, and the at least one power conversion unit includes a protective earth line.

Optionally, in the bipolar-independent DC power delivery system, the bipolar DC power busway includes a positive line, a middle line, and a negative line.

Optionally, in the bipolar-independent DC power delivery system, the bipolar DC power busway includes a protective earth line connected the grid-tied power electronic converter with the at least one power conversion unit.

Optionally, in the bipolar-independent DC power delivery system, the bipolar DC power busway further includes a positive line, a middle line, and a negative line.

Optionally, in the bipolar-independent DC power delivery system, the grid-tied power electronic converter includes a first transformer and two output AC to DC converters, wherein the first transformer includes a primary coil and identical first and second secondary coils all wound around a same core, wherein one of the output AC to DC converters is connected to the first secondary coil, and another one of the output AC to DC converters is connected to the second secondary coil, and wherein the bipolar DC power busway includes a positive line connected to a positive end of one of the output AC to DC converters, a middle line connected between the two output AC to DC converters, and a negative line connected to a negative end of another one of the output AC to DC converters.

Optionally, in the bipolar-independent DC power delivery system, the output AC to DC converters may both include bridge rectifiers.

Optionally, in the bipolar-independent DC power delivery system, the at least one power conversion unit includes a second transformer, and two inverters, wherein the second transformer includes two primary coils and a secondary coil all wound around a same core, wherein the two primary coils are connected to the two inverters, respectively, and wherein one of the inverters is connected between the positive line and the middle line, and another one of the inverters is connected between the middle line and the negative line.

Optionally, in the bipolar-independent DC power delivery system, the at least one power conversion unit further includes an AC to DC converter connected to the secondary coil.

Optionally, in the bipolar-independent DC power delivery system, the at least one power conversion unit includes two second transformers, and two inverters, wherein the two second transformers are connected to the two inverters, respectively, and wherein one of the inverters is connected between the positive line and the middle line, and another one of the inverters is connected between the middle line and the negative line.

Optionally, in the bipolar-independent DC power delivery system, the at least one power conversion unit further includes two AC to DC converters connected to secondary coils of the two second transformers, respectively, and outputs of the two AC to DC converters are connected in parallel.

Optionally, in the bipolar-independent DC power delivery system, the grid-tied power electronic converter includes three single phase power converters, each of the single phase power converters includes a plurality of converters, each converter includes a AC to DC converter, a DC to AC converter, a first transformer, and two output AC to DC converters, wherein the first transformer includes a primary coil and identical first and second secondary coils all wound around a same core, wherein one of the output AC to DC converters is connected to the first secondary coil, and another one of the output AC to DC converters is connected to the second secondary coil, and wherein the bipolar DC power busway includes a positive line connected to a positive end of one of the output AC to DC converters, a middle line connected between two of the output AC to DC converters, and a negative line connected to a negative end of another one of the output AC to DC converters.

Optionally, in the bipolar-independent DC power delivery system, the grid-tied power electronic converter includes two first transformers and two output AC to DC converters, wherein the two AC to DC converters are connected to the two first transformers, respectively, and wherein the bipolar DC power busway includes a positive line connected to a positive end of one of the output AC to DC converters, a middle line connected between the two output AC to DC converters, and a negative line connected to a negative end of another one of the output AC to DC converters.

Optionally, in the bipolar-independent DC power delivery system, the at least one power conversion unit includes a second transformer, and two inverters, wherein the second transformer includes two primary coils and a secondary coil all wound around a same core, wherein the two primary coils are connected to the two inverters, respectively, and wherein one of the inverters is connected between the positive line and the middle line, and another one of the inverters is connected between the middle line and the negative line.

Optionally, in the bipolar-independent DC power delivery system, the at least one power conversion unit further includes an AC to DC converter connected to the secondary coil.

Optionally, in the bipolar-independent DC power delivery system, the at least one power conversion unit includes two second transformers, and two inverters, wherein the two second transformers are connected to the two inverters, respectively, and wherein one of the inverters is connected between the positive line and the middle line, and another one of the inverters is connected between the middle line and the negative line.

Optionally, in the bipolar-independent DC power delivery system, the at least one power conversion unit further includes two AC to DC converters connected to secondary coils of the two second transformers, respectively, and outputs of the two AC to DC converters are connected in parallel.

Optionally, in the bipolar-independent DC power delivery system, the grid-tied power electronic converter includes three single phase power converters, each of the single phase power converters includes a plurality of converters, each converter includes an AC to DC converter, two DC to AC converters, two first transformers, and two output AC to DC converters, wherein the two output AC to DC converters are connected to the two first transformers, respectively, and wherein the bipolar DC power busway includes a positive line connected to a positive end of one of the output AC to DC converters, a middle line connected between the two output AC to DC converters, and a negative line connected to a negative end of another one of the output AC to DC converters.

Optionally, the bipolar-independent DC power delivery system further includes a breaker connected to the positive line, and a breaker connected to the negative line.

Optionally, the bipolar-independent DC power delivery system further includes a fuse connected to the positive line, and a fuse connected to the negative line.

In comparison with prior art, the disclosed bipolar-independent DC power delivery system provides grid-tied power electronic converter including two independent DC outputs cascaded in series. A fault condition in one DC output does not stop the operation of the other DC output. The bipolar DC power busway has one more conductor, middle line. Power conversion units receive power with two independent DC inputs. In the event of one DC input is lost, power conversion units can continue to operate at de-rated power. That is, the power conversion unit includes fault-tolerance feature that even one of two independent DC input voltages is lost, the power conversion units can still receive power from the other DC input and continue delivering around 50% of rated power to the load. The proposed DC power delivery system can continue to operate at de-rated power when one of two independent DC voltages fails.

### DESCRIPTION OF DRAWINGS

FIG. 1 is a schematic diagram of a circuit diagram of a bipolar-independent DC power delivery system according to an embodiment of the disclosure;
FIG. 2 is a schematic diagram of a grid-tied power electronic converters with bipolar-independent outputs according to one embodiment of the disclosure;
FIG. 3 is a schematic diagram of a grid-tied power electronic converters with bipolar-independent outputs according to another embodiment of the disclosure;
FIG. 4 is a schematic diagram of a grid-tied power electronic converters with bipolar-independent outputs according to another embodiment of the disclosure;
FIG. 5 is a schematic diagram of bipolar DC power busway with positive, middle, and negative lines according to one embodiment of the disclosure;
FIG. 6 is a schematic diagram of a bipolar DC power busway with positive, middle, negative, and PE lines according to one embodiment of the disclosure;
FIG. 7 is a schematic diagram of a power conversion units with dual inputs and fault tolerance according to one embodiment of the disclosure;
FIG. 8 is a schematic diagram of a power conversion units with dual inputs and fault tolerance according to another embodiment of the disclosure.

### DETAILED DESCRIPTION OF PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

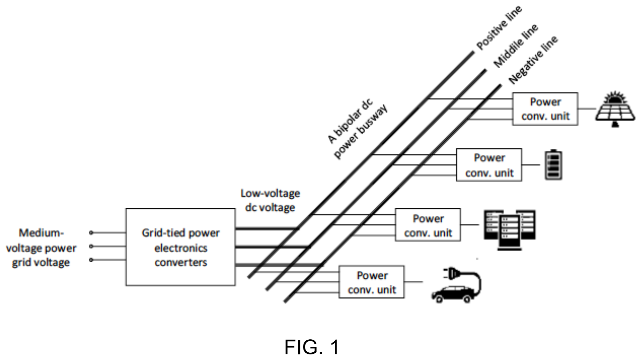

This disclosure provides a bipolar-independent DC power delivery system. FIG. 1 shows its diagram. The bipolar-independent DC power delivery system includes a grid-tied power electronic converter, a bipolar DC power busway, and a plurality of power conversion units.

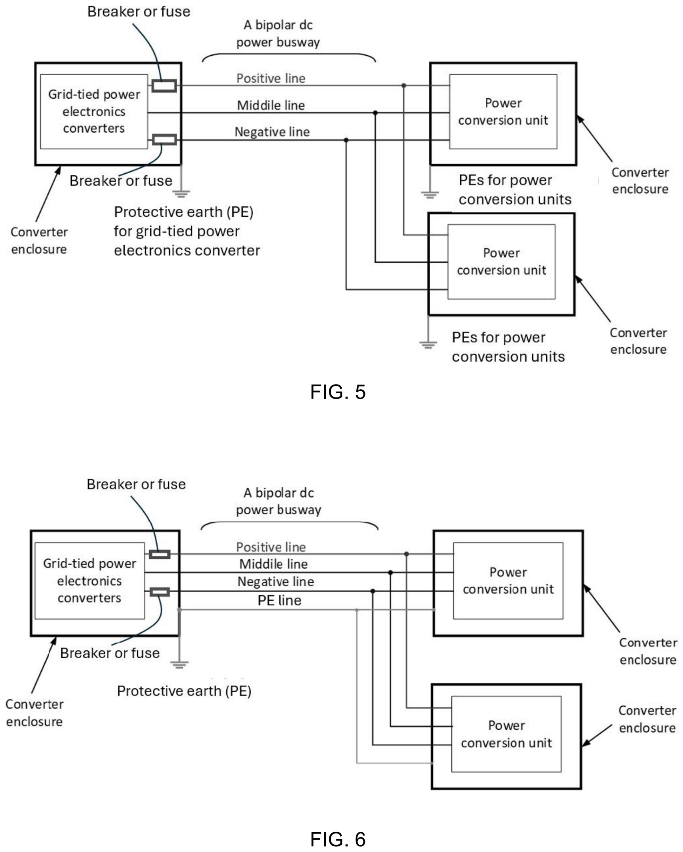

Also referring to FIG. 5 and FIG. 6, FIG. 5 is a schematic diagram of bipolar DC power busway with positive, middle, and negative lines according to one embodiment of the disclosure. FIG. 6 is a schematic diagram of a bipolar DC power busway with positive, middle, negative, and PE lines according to one embodiment of the disclosure. One embodiment of the disclosure provides a bipolar-independent DC power delivery system as shown in FIG. 1, FIG. 5, or FIG. 6, including: a grid-tied power electronic converter, a bipolar DC power busway, and at least one power conversion unit. The grid-tied power electronic converter is configured to connect with a medium-voltage distribution grid to convert a distribution grid voltage of the medium-voltage distribution grid to two independent DC voltages with same magnitude and opposite polarities. The bipolar DC power busway is connected to the grid-tied power electronic converter, and the at least one power conversion unit is connected to the bipolar DC power busway. The at least one power conversion unit is configured to receive or send electric power from at least one of the independent DC voltages.

### 1. Grid-tied power electronic converter

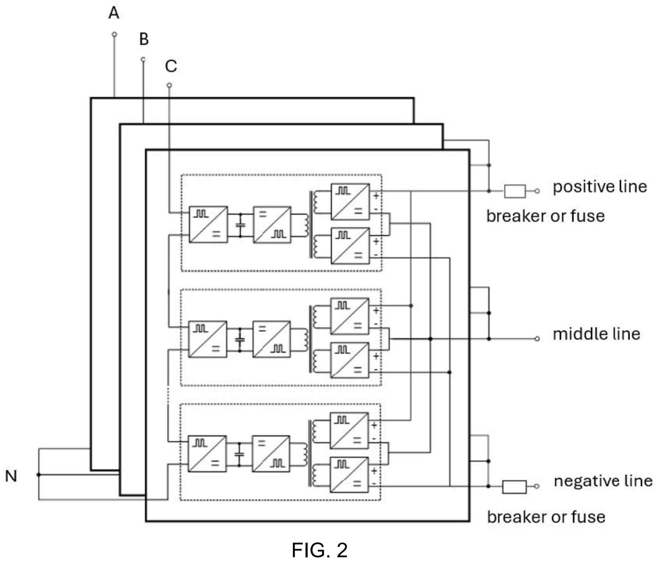

The grid-tied power electronic converter connects to a medium-voltage (from 1 kV to 69 kV) AC or DC distribution grid. FIG. 1 uses a three-phase AC grid as an example. The grid-tied power electronic converter converts the distribution grid voltage to two independent DC voltages. The two independent DC voltages are of same magnitude and opposite polarities. The two DC voltages are independent of each other. This means that if one output is disabled, the other output can continue to operate at its rated specifications. FIGS. 2, 3 and 4 show some examples of grid-tied power electronic converters that can produce two bipolar-independent DC voltages. Two bipolar-independent DC outputs are connected in a cascaded manner to positive, middle, and negative lines of the bipolar DC power busway.

Referring to FIG. 2, FIG. 2 is a schematic diagram of a grid-tied power electronic converters with bipolar-independent outputs according to one embodiment of the disclosure. Optionally, in the bipolar-independent DC power delivery system, the grid-tied power electronic converter includes a first transformer and two output AC to DC converters, wherein the first transformer includes a primary coil and identical first and second secondary coils all wound around a same core, wherein one of the output AC to DC converters is connected to the first secondary coil, and another one of the output AC to DC converters is connected to the second secondary coil, and wherein the bipolar DC power busway includes a positive line connected to a positive end of one of the output AC to DC converters, a middle line connected between the two output AC to DC converters, and a negative line connected to a negative end of another one of the output AC to DC converters.

Referring to FIG. 2, optionally, in the bipolar-independent DC power delivery system, the grid-tied power electronic converter includes three single phase power converters, each of the single phase power converters includes a plurality of converters, each converter includes a AC to DC converter, a DC to AC converter, a first transformer, and two output AC to DC converters, wherein the first transformer includes a primary coil and identical first and second secondary coils all wound around a same core, wherein one of the output AC to DC converters is connected to the first secondary coil, and another one of the output AC to DC converters is connected to the second secondary coil, and wherein the bipolar DC power busway includes a positive line connected to a positive end of one of the output AC to DC converters, a middle line connected between two of the output AC to DC converters, and a negative line connected to a negative end of another one of the output AC to DC converters.

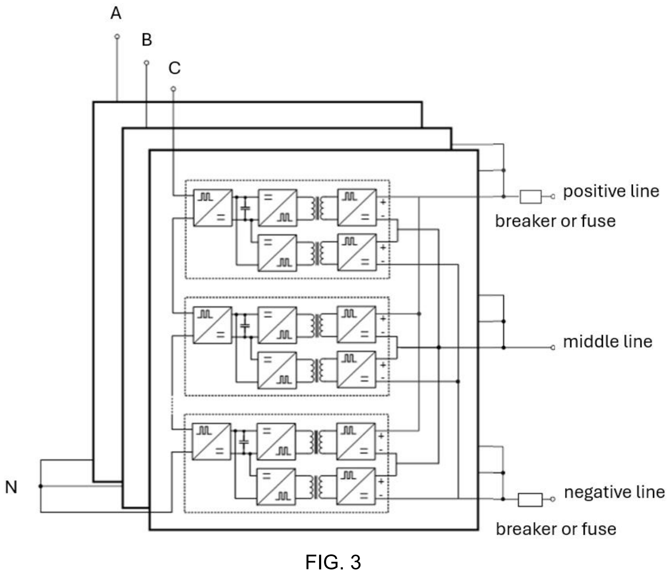

Referring to FIG. 3, FIG. 3 is a schematic diagram of a grid-tied power electronic converter with bipolar-independent outputs according to another embodiment of the disclosure. Optionally, in the bipolar-independent DC power delivery system, the grid-tied power electronic converter includes two first transformers and two output AC to DC converters, wherein the two AC to DC converters are connected to the two first transformers, respectively, and wherein the bipolar DC power busway includes a positive line connected to a positive end of one of the output AC to DC converters, a middle line connected between the two output AC to DC converters, and a negative line connected to a negative end of another one of the output AC to DC converters.

Referring to FIG. 3, optionally, in the bipolar-independent DC power delivery system, the grid-tied power electronic converter includes three single phase power converters, each of the single phase power converters includes a plurality of converters, each converter includes an AC to DC converter, two DC to AC converters, two first transformers, and two output AC to DC converters, wherein the two output AC to DC converters are connected to the two first transformers, respectively, and wherein the bipolar DC power busway includes a positive line connected to a positive end of one of the output AC to DC converters, a middle line connected between the two output AC to DC converters, and a negative line connected to a negative end of another one of the output AC to DC converters.

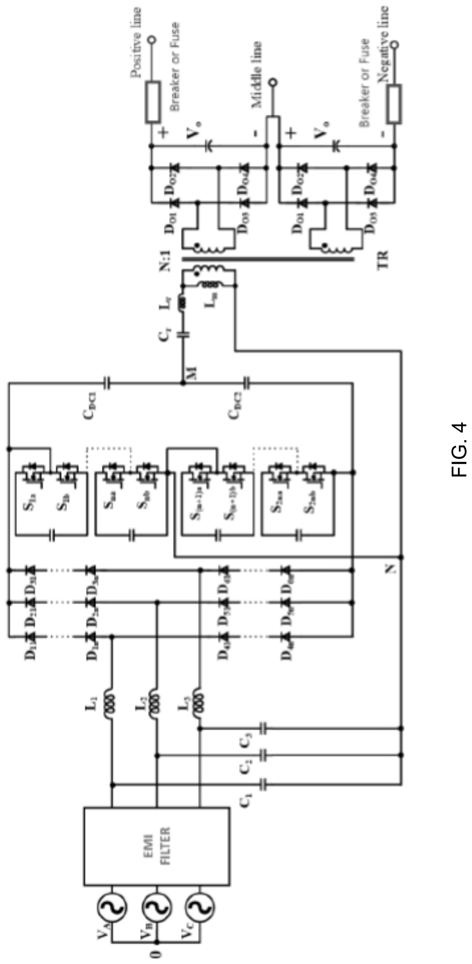

Referring to FIG. 4, FIG. 4 is a schematic diagram of a grid-tied power electronic converters with bipolar-independent outputs according to another embodiment of the disclosure. Optionally, in the bipolar-independent DC power delivery system, the output AC to DC converters are both bridge rectifiers.

### 2. Bipolar DC power busway

The bipolar DC power busway connects DC outputs of the grid-tied power electronic converter to downstream power conversion units. The bipolar DC power busway has at least three power conductors: positive, middle, and negative lines as shown in FIG. 5. In another example, the bipolar DC power busway can have three power conductors and one protective earth conductor: positive, middle, negative, and protective earth (PE) line as shown in FIG. 6.

Referring to FIG. 5, optionally, in the bipolar-independent DC power delivery system, the grid-tied power electronic converter includes a protective earth line PE, and the at least one power conversion unit includes a protective earth line PE.

Referring to FIG. 5, optionally, in the bipolar-independent DC power delivery system, the bipolar DC power busway includes a positive line, a middle line, and a negative line.

Referring to FIG. 6, optionally, in the bipolar-independent DC power delivery system, the bipolar DC power busway includes a protective earth line PE connected the grid-tied power electronic converter with the at least one power conversion unit.

Referring to FIG. 6, optionally, in the bipolar-independent DC power delivery system, the bipolar DC power busway further includes a positive line, a middle line, and a negative line.

Referring to FIG. 2 to FIG. 6, optionally, in the bipolar-independent DC power delivery system further includes a breaker connected to the positive line, and a breaker connected to the negative line.

Referring to FIG. 2 to FIG. 6, optionally, in the bipolar-independent DC power delivery system further includes a fuse connected to the positive line, and a fuse connected to the negative line.

### 3. Power conversion units

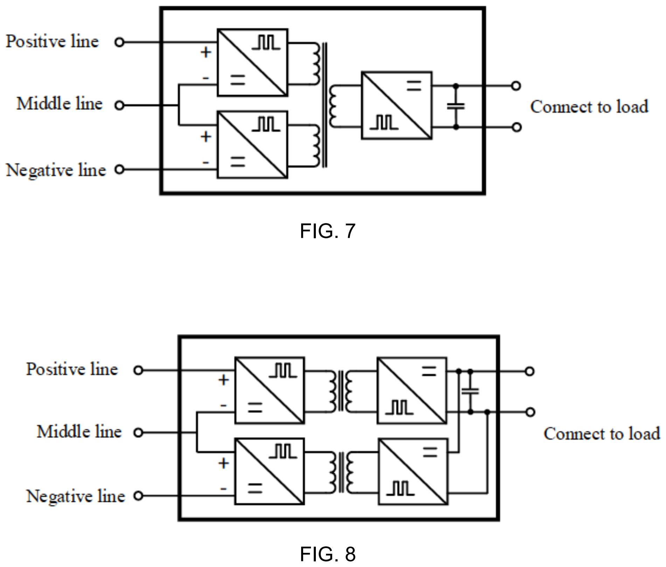

Power conversion units receive two independent DC voltages from positive, middle, and negative lines of the bipolar DC power busway and converter them into a DC or AC voltage according to application needs. Power conversion units can lose one of two independent DC input voltages. This can be caused by a fault of bipolar DC power busway, e.g. a broken connection of the positive line. This can be also caused by a failure of the grid-tied power electronic converter, e.g. a short circuit fault between negative and middle lines. In the event of a DC input voltage is lost, power conversion units can still receive power from the other DC input and continue delivering around 50% of rated power to the load. Because of this feature, the proposed bipolar-independent DC power delivery system can have fault-tolerance operation capability and continue to operate at de-rated power. FIGS. 7 and 8 show two examples of power conversion units with this fault-tolerance feature. These two figures use EV charging station application as an example. Power conversion units output a DC voltage to charge EV's battery.

Referring to FIG. 7, FIG. 7 is a schematic diagram of a power conversion units with dual inputs and fault tolerance according to one embodiment of the disclosure. Optionally, in the bipolar-independent DC power delivery system, the at least one power conversion unit includes a second transformer, and two inverters, wherein the second transformer includes two primary coils and a secondary coil all wound around a same core, wherein the two primary coils are connected to the inverters, respectively, and wherein one of the inverters is connected between the positive line and the middle line, and another one of the inverters is connected between the middle line and the negative line.

Referring to FIG. 7, optionally, in the bipolar-independent DC power delivery system, the at least one power conversion unit further includes an AC to DC converter connected to the secondary coil.

Referring to FIG. 8, FIG. 8 is a schematic diagram of a power conversion units with dual inputs and fault tolerance according to another embodiment of the disclosure. Optionally, in the bipolar-independent DC power delivery system, the at least one power conversion unit includes two second transformers, and two inverters, wherein the two second transformers are connected to the two inverters, respectively, and wherein one of the inverters is connected between the positive line and the middle line, and another one of the inverter is connected between the middle line and the negative line.

Referring to FIG. 8, optionally, in the bipolar-independent DC power delivery system, the at least one power conversion unit further includes two AC to DC converters connected to secondary coils of the two second transformers, respectively, and outputs of the two AC to DC converters are connected in parallel.

Compared to existing solution, the proposed solution has three key differences: The grid-tied power electronic converter has two independent DC outputs cascaded in series. A fault condition in one DC output does not stop the operation of the other DC output. The bipolar DC power busway has one more conductor, which is the middle line. Power conversion units receive power from the two independent DC inputs. In the event of one DC input is lost, power conversion units can continue to operate at de-rated power.

In comparison with prior art, the disclosed bipolar-independent DC power delivery system provides grid-tied power electronic converter including two independent DC outputs cascaded in series. A fault condition in one DC output does not stop the operation of the other DC output. The bipolar DC power busway has one more conductor, which is the middle line. Power conversion units receive power from two independent DC inputs. In the event of one DC input is lost, power conversion units can continue to operate at de-rated power. That is, the power conversion unit includes fault-tolerance feature that even one of two independent DC input voltages is lost, the power conversion units can still receive power from the other DC input and continue delivering around 50% of rated power to the load. The proposed DC power delivery system can continue to operate at de-rated power when one of the two independent DC voltages fails.

The present disclosure has been described with preferred embodiments thereof and it is understood that many changes and modifications to the described embodiments can be carried out without departing from the scope and the spirit of the invention that is intended to be limited only by the appended claims.

## Claims

1. A bipolar-independent DC power delivery system, comprising:
a grid-tied power electronic converter configured to connect with a medium-voltage distribution grid to convert a distribution grid voltage of the medium-voltage distribution grid to two independent DC voltages with same magnitude and opposite polarities;
a bipolar DC power busway connected to the grid-tied power electronic converter; and
at least one power conversion unit connected to the bipolar DC power busway, wherein the at least one power conversion unit is configured to receive or send electric power from at least one of the independent DC voltages.

2. The bipolar-independent DC power delivery system according to claim 1, wherein the grid-tied power electronic converter comprises a first protective earth line, and the at least one power conversion unit comprises a second protective earth line.

3. The bipolar-independent DC power delivery system according to claim 1, wherein the bipolar DC power busway comprises a third protective earth line connected the grid-tied power electronic converter with the at least one power conversion unit.

4. The bipolar-independent DC power delivery system according to any one of the above claims, wherein the bipolar DC power busway comprises a positive line, a middle line, and a negative line.

5. The bipolar-independent DC power delivery system according to claim 4, further comprising a breaker connected to the positive line, and a breaker connected to the negative line.

6. The bipolar-independent DC power delivery system according to claim 4, further comprising a fuse connected to the positive line, and a fuse connected to the negative line.

7. The bipolar-independent DC power delivery system according to any one of the above claims, wherein the grid-tied power electronic converter comprises a first transformer and two output AC to DC converters, wherein the first transformer comprises a primary coil and identical first and second secondary coils all wound around a same core, wherein one of the output AC to DC converters is connected to the first secondary coil, and another one of the output AC to DC converters is connected to the second secondary coil, and wherein the bipolar DC power busway comprises a positive line connected to a positive end of one of the output AC to DC converters, a middle line connected between the two output AC to DC converters, and a negative line connected to a negative end of another one of the output AC to DC converters.

8. The bipolar-independent DC power delivery system according to any one of claims 1 to 6, wherein the grid-tied power electronic converter comprises two first transformers and two output AC to DC converters, wherein the two AC to DC converters are connected to the two first transformers, respectively, and wherein the bipolar DC power busway comprises a positive line connected to a positive end of one of the output AC to DC converters, a middle line connected between the two output AC to DC converters, and a negative line connected to a negative end of another one of the output AC to DC converters.

9. The bipolar-independent DC power delivery system according to any one of the above claims, wherein the at least one power conversion unit comprises a second transformer, and two inverters, wherein the second transformer comprises two primary coils and a secondary coil all wound around a same core, wherein the two primary coils are connected to the two inverters, respectively, and wherein one of the inverters is connected between the positive line and the middle line, and another one of the inverters is connected between the middle line and the negative line.

10. The bipolar-independent DC power delivery system according to claim 9, wherein the at least one power conversion unit further comprises an AC to DC converter connected to the secondary coil.

11. The bipolar-independent DC power delivery system according to claim 7 or 8, wherein the at least one power conversion unit comprises two second transformers, and two inverters, wherein the two second transformers are connected to the two inverters, respectively, and wherein one of the inverters is connected between the positive line and the middle line, and another one of the inverters is connected between the middle line and the negative line.

12. The bipolar-independent DC power delivery system according to claim 11, wherein the at least one power conversion unit further comprises two AC to DC converters connected to secondary coils of the two second transformers, respectively, and outputs of the two AC to DC converters are connected in parallel.

13. The bipolar-independent DC power delivery system according to any one of the above claims, wherein the grid-tied power electronic converter comprises three single phase power converters, each of the single phase power converters comprises a plurality of converters, each converter comprises a AC to DC converter, a DC to AC converter, a first transformer, and two output AC to DC converters, wherein the first transformer comprises a primary coil and identical first and second secondary coils all wound around a same core, wherein one of the output AC to DC converters is connected to the first secondary coil, and another one of the output AC to DC converters is connected to the second secondary coil, and wherein the bipolar DC power busway comprises a positive line connected to a positive end of one of the output AC to DC converters, a middle line connected between two of the output AC to DC converters, and a negative line connected to a negative end of another one of the output AC to DC converters.

14. The bipolar-independent DC power delivery system according to any one of the above claims, wherein the grid-tied power electronic converter comprises three single phase power converters, each of the single phase power converters comprises a plurality of converters, each converter comprises an AC to DC converter, two DC to AC converters, two first transformers, and two output AC to DC converters, wherein the two output AC to DC converters are connected to the two first transformers, respectively, and wherein the bipolar DC power busway comprises a positive line connected to a positive end of one of the output AC to DC converters, a middle line connected between the two output AC to DC converters, and a negative line connected to a negative end of another one of the output AC to DC converters.

15. The bipolar-independent DC power delivery system according to any one of the above claims, wherein the output AC to DC converters comprises bridge rectifiers.
